# EUROPEAN PATENT SPECIFICATION

(11) **EP 3 685 990 B1**
(45) Date of publication and mention of the grant of the patent: **29.09.2021**
(21) Application number: 19153369.4
(22) Date of filing: 23.01.2019
(51) Int. Cl.: B29C 64/153, B29C 64/255

(54) **APPARATUS FOR ADDITIVELY MANUFACTURING THREE-DIMENSIONAL OBJECTS**
VORRICHTUNG ZUR GENERATIVEN FERTIGUNG DREIDIMENSIONALER OBJEKTE
APPAREIL DE FABRICATION ADDITIVE D'OBJETS TRIDIMENSIONNELS

(43) Date of publication of application: 29.07.2020
(73) Proprietor: Concept Laser GmbH, 96215 Lichtenfels (DE)
(72) Inventor: Hiemann, Denise, 96215 Lichtenfels (DE); Hofmann, Alexander, 96260 Weismain (DE); Hetzel, Ralf, 96231 Bad Staffelstein (DE)
(74) Representative: Hafner & Kohl PartmbB

(56) References cited:
- EP-A2- 3 124 140
- WO-A1-2017/207127
- WO-A2-2011/001270
- DE-A1-102014 010 932
- US-A1- 2015 336 330

## Description

Apparatus for additively manufacturing three-dimensional objects The invention relates to an apparatus for additively manufacturing three-dimensional objects by means of successive layerwise consolidation of layers of a build material which can be consolidated by means of an energy source, comprising a dose module and a build module and an application unit, wherein the application unit is adapted to convey build material from a dose plane provided by the dose module to a build plane of the build module.

Apparatuses for additively manufacturing three-dimensional objects are generally known from prior art. Usually, build material is provided in a dose plane via a dose module which build material can be conveyed from the dose plane to a build plane where it is (evenly) distributed, e.g. to be selectively irradiated or otherwise consolidated. Further, it is known from prior art to use dose modules for providing the build material in an additive manufacturing process. Such dose modules may, inter alia, be built as exchangeable modules that can be separably connected to the apparatus to provide the build material in the dose plane. For example, if the build material reservoir of the dose module is empty or the dose module needs maintenance, the dose module may be detached from the apparatus and a new dose module (or the refilled or serviced dose module) may be attached to provide build material for the additive manufacturing process. US 2015/336330 A1 discloses such an apparatus for manufacturing three-dimensional objects.

Disadvantageously, the additive manufacturing process cannot be performed while the dose module is not attached to the apparatus, i.e. while no dose module is operational. Hence, the additive manufacturing process has to be interrupted / paused until a new or the refilled dose module is again operational, e.g. properly attached to the apparatus and adapted to provide build material in the dose plane. Thus, the exchange or refill of the dose module leads to a downtime of the apparatus leading to an overall increase of the manufacturing time required to additively manufacture the three-dimensional object.

It is an object of the invention to provide an improved apparatus for additively manufacturing three-dimensional objects, wherein the additive manufacturing process can be performed more efficiently, in particular downtimes of the apparatus can be reduced or avoided.

The object is inventively achieved by an apparatus according to claim 1. Advantageous embodiments of the invention are subject to the dependent claims.

The apparatus described herein is an apparatus for additively manufacturing three-dimensional objects, e.g. technical components, by means of successive selective layerwise consolidation of layers of a powdered build material ("build material") which can be consolidated by means of an energy source, e.g. an energy beam, in particular a laser beam or an electron beam. A respective build material can be a metal, ceramic or polymer powder. A respective energy beam can be a laser beam or an electron beam. A respective apparatus can be an apparatus in which an application of build material and a consolidation of build material is performed separately, such as a selective laser sintering apparatus, a selective laser melting apparatus or a selective electron beam melting apparatus, for instance. Alternatively, the successive layerwise selective consolidation of build material may be performed via at least one binding material. The binding material may be applied with a corresponding application unit and, for example, irradiated with a suitable energy source, e.g. a UV light source.

The apparatus may comprise a number of functional units which are used during its operation. Exemplary functional units are a process chamber, an irradiation device which is adapted to selectively irradiate a build material layer disposed in the process chamber with at least one energy beam, and a stream generating device which is adapted to generate a gaseous fluid stream at least partly streaming through the process chamber with given streaming properties, e.g. a given streaming profile, streaming velocity, etc. The gaseous fluid stream is capable of being charged with non-consolidated particulate build material, particularly smoke or smoke residues generated during operation of the apparatus, while streaming through the process chamber. The gaseous fluid stream is typically inert, i.e. typically a stream of an inert gas, e.g. argon, nitrogen, carbon dioxide, etc.

The invention is based on the idea that at least one buffer module is provided, wherein the application unit is adapted to convey build material from a buffer plane to the build plane. Build material is provided in the buffer plane by the buffer module in an operational state of the apparatus in which the dose module is not available, i.e. build material cannot be provided in the dose plane, in particular during an exchange of the dose module, wherein the buffer plane is smaller than the dose plane. In other words, the inventive apparatus comprises a buffer module that provides a buffer plane in which build material can be supplied and from which buffer plane build material can be conveyed via the application unit to the build plane while the dose module is not operational. The dose module provides build material in a dose plane during a regular mode of operation, i.e. while the dose module is connected to the apparatus and adapted to provide build material.

Thus, it is possible to avoid downtimes of the apparatus, as build material can be provided via the buffer module while the dose module is not operational, e.g. detached from the apparatus. Therefore, build material can be provided in the buffer plane and conveyed to and distributed in the build plane to continue the additive manufacturing process. Of course, after the or a dose module is properly connected to the apparatus and adapted to provide build material in the dose plane, the build material may again be provided via the dose module. The buffer module is therefore, only used to provide build material while the dose module is not operational. Hence, the invention is also based on the idea that only a comparatively smaller volume of build material is provided via the buffer module, as the vast amount of build material is provided via the dose module and the buffer module is only used during an exchange or a refill of the dose module, i.e. in downtimes of the dose module.

Hence, it is advantageously achieved that the buffer plane of the buffer module of the inventive apparatus is smaller than the dose plane of the dose module. This further provides the advantage that the buffer module, which is usually arranged between the dose module and the build module, has a smaller geometrical footprint, i.e. smaller size in application direction. Therefore, the application unit, in particular the application element, that is used to convey the build material from the dose plane to the build plane in a regular mode of operation of the apparatus, usually is moved over the buffer module, wherein due to the smaller size of the buffer module, time can be saved during the additive manufacturing process. Also, the overall increase of the size of the additive manufacturing apparatus due to the additional buffer module is comparatively low, as the buffer module is smaller than the other modules, such as the dose module or the build module, for instance.

According to a preferred embodiment of the inventive apparatus, the buffer plane is smaller in application direction than the dose plane. Hence, the application path the application element has to be moved along to pick up build material from the buffer plane and to convey the build material from the buffer plane to the build plane is smaller compared to the size of the dose plane, as the buffer plane is smaller in application direction as the dose plane. Therefore, with each application step in which build material is picked up and conveyed to the build plane, time can be saved, as the application element can be moved along a comparatively shorter application path.

Advantageously, the buffer plane may comprise the same width as the dose plane perpendicular to the application direction. Thus, the application element may pick up build material to be distributed and conveyed over the same size or width as the build plane, since the dose plane and the buffer plane may comprise the same size. Therefore, build material that is picked up from the buffer plane may be conveyed or moved to the build plane the same way as build material picked up from the dose plane, wherein of course, the amount of build material has to be the same as the amount provided via the dose plane. By providing build material in the buffer plane over the same width as in the dose plane, the width of the application element may advantageously be used completely as in a regular application step in which build material is picked up from the dose plane and conveyed to the build plane.

The buffer module may preferably be arranged next to the dose module. For example, the buffer module may be arranged between the dose module and the build module in application direction. Hence, the application element may be moved across the dose plane that is provided via the dose module to pick up and convey build material to the build plane in a regular mode of operation. If the dose module is not operational, the application element may be moved essentially along the same application path which is even shorter for the buffer module that is arranged between the dose module and the build module. In other words, in a regular mode of operation in which the dose module provides the build material, the build material is moved across the buffer plane to the build plane. In a mode of operation in which the dose module is not operational the application element of the application unit only has to be moved along a shorter application path across the buffer plane to pick up and convey build material to the build plane.

It is also possible to arrange the buffer module on a side of the dose module opposite from the build module or facing away from the build module, respectively. Therefore, in application direction the buffer module is arranged on a side of the dose module that faces away from the build module. In other words, the sequence in which the dose module, the buffer module and the build module are arranged in application direction is buffer module, dose module and build module in this embodiment. According to this embodiment, it is advantageously achieved that the time for performing the application process is reduced in the regular mode of operation, as during a regular mode of operation in which build material is provided via the dose module, the application element does not have to be moved across the buffer plane, as the buffer module is arranged on the opposite side of the dose module. According to this embodiment, the application path leads the application element across the dose plane to the build plane. Hence, the application element can be moved across the dose plane and convey the build material directly to the build plane without crossing the buffer plane.

In an operational state of the dose module in which build material cannot be provided via the dose module, the application element may be moved to the buffer plane to pick up and move the build material to the build plane. As build material is only provided via the buffer module in an operational state of the dose module in which the dose module is not adapted to provide build material, e.g. an empty state of the dose module or a detached state of the dose module, the application element has to be moved along the additional length of the application path only in a comparatively small ratio of the additive manufacturing process. Compared with an apparatus known from prior art, the application process is just as fast in a regular mode of operation, wherein during a downtime of the dose module build material can be provided via the buffer module and therefore, avoiding a downtime of the apparatus. Thus, in the vast ratio of the additive manufacturing process in which build material is provided via the dose module, time can be saved with each application step. Of course, it is possible to cover the opening of the buffer module or the dose module dependent on the mode of operation and dependent on the arrangement of the buffer module, in particular dependent on whether build material is provided via the dose module or the buffer module.

The inventive apparatus may further be improved in that the buffer module comprises a buffer carrier element carrying build material in a buffer chamber, which, preferably height adjustable, buffer carrier element is movable via at least one buffer actuator, wherein the buffer module is adapted to adjust an amount of build material provided in the buffer plane dependent on a buffer factor. In other words, the amount of build material that is provided via the buffer module is adjusted by positioning the buffer carrier element accordingly. For example, the buffer element carrier can be moved relative to the buffer chamber, in particular upwards, to provide build material in the buffer plane. A buffer factor defines the amount of build material that is provided in the buffer plane, e.g. the step size via which the buffer carrier element is moved via the buffer actuator. Hence, dependent on the buffer factor, the buffer carrier element can be moved (upwards) to provide a defined amount of build material in the buffer plane that can be picked up and can be conveyed to the build plane via the at least one application element of the application unit.

Preferably, the buffer factor is larger than a corresponding dose factor of the dose module. As the dose plane of the dose module is larger than the buffer plane of the buffer module, the buffer factor has to take ensure that enough build material is provided in that a proper application of layers of build material is assured. Therefore, as the size of the dose plane is larger compared with the size of the buffer plane, the buffer factor has to be larger than the dose factor. Therefore, the buffer carrier element has to be moved for a comparatively longer path to move a suitable amount of build material to the buffer plane, in particular the same amount of build material that is provided via the dose module in a corresponding application step.

According to another embodiment of the inventive apparatus, the application unit may comprise at least one application element movable along an application path during an application of build material, which application path extends from a starting point to an endpoint, wherein during an operational state in which the dose module is not available, the application unit is adapted to change the starting point, in particular to an edge of the buffer module. As described before, build material may be picked up, conveyed to the build plane and distributed in the build plane via an application unit, in particular an application element of the application unit. During a regular mode of operation in which the dose module is available or operational, respectively, the application element may be moved from the starting point to endpoint, for example from an edge of the dose module, in particular an edge of the dose plane across the build plane to apply a layer of build material in the build plane, wherein the endpoint may lie behind the build plane, e.g. at an edge of an overflow module.

If the operational state of the dose module indicates that the dose module is not available or not operational, respectively, the starting point may be changed via the application unit or a corresponding control unit. Thus, the application path of the application element is changed in that the application element is moved across the buffer plane to pick up build material. Dependent on the arrangement of the buffer module in the apparatus, time can be saved by reducing the application path of the application element to a path between a starting point, for example at an edge of the buffer plane. Otherwise, for example, if the buffer module is arranged on a side of the dose module facing away from application direction, time can be saved during the regular mode of operation, as the application element only has to be moved across the dose plane and across the build plane, instead of moving the application element across the buffer plane, as well.

Preferably, the buffer module is static during an additive manufacturing process that is performed on the apparatus. In other words, in contrast to the dose module, which is preferably exchangeable, in particular automatically exchangeable, the buffer module remains in a fixed position in the apparatus during an additive manufacturing process. Of course, the buffer module may also be changed manually or automatically after the additive manufacturing process is finished. Thus, the arrangement of the buffer module may be simplified in that during an additive manufacturing process a change or a movement of the buffer module is not possible, but the buffer module remains static in the apparatus.

The buffer module may be exchangeable in advance to or after an additive manufacturing process. Hence, before an additive manufacturing process is started, the buffer module may be exchanged or may be refilled to provide build material, if the dose module is not operational. Of course, it is also possible to exchange the buffer module or refill the buffer module after an additive manufacturing process is finished. The buffer module may preferably be manually or automatically exchangeable, wherein an automated exchange of the buffer module is preferred.

According to another embodiment of the inventive apparatus, the buffer module may be exchangeable during operation of the apparatus. For example, as during certain additive manufacturing processes performed on the apparatus multiple changes of the dose module may become necessary, for example an additive manufacturing process with a high build material consumption, or dose modules that need to be exchanged, it is possible to exchange the buffer module during the operation of the apparatus, in particular during an additive manufacturing process performed on the apparatus. Hence, if the buffer module is empty it is preferred that the buffer module can be exchanged, in particular during an operational state of the dose module in which the dose module provides build material to the additive manufacturing process. Thus, during the exchange of the buffer module, build material may be provided via the dose module in that a downtime of the apparatus may also be avoided.

Method for operating an apparatus for additively manufacturing three-dimensional objects by means of successive layerwise consolidation of layers of a build material which can be consolidated by means of an energy source, which apparatus comprises a dose module and a build module and an application unit, wherein the application unit is adapted to convey build material from a dose plane provided by the dose module to a build plane of the build module, wherein build material is conveyed from at least one buffer plane provided by a buffer module in an operational state of the apparatus in which the dose module is not available, in particular during an exchange of the dose module, wherein the buffer plane is smaller than the dose plane.

Self-evidently, all details, features and advantages described with respect to the inventive apparatus are fully transferable to the inventive buffer module and the inventive method.

Exemplary embodiments of the invention are described with reference to the Fig. The Fig. are schematic diagrams, wherein
- Fig. 1: shows an inventive apparatus according to a first embodiment;
- Fig. 2: shows a top view on the inventive apparatus of Fig. 1; and
- Fig. 3: shows an inventive apparatus according to a second embodiment.

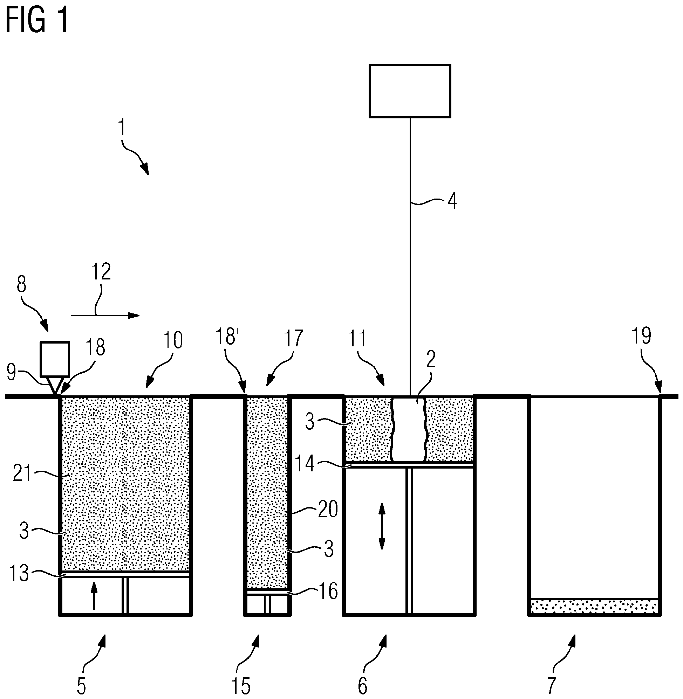

Fig. 1 shows an apparatus 1 for additively manufacturing three-dimensional objects 2 by means of successive layerwise consolidation of layers of a build material 3, e.g. via an energy beam 4. The apparatus 1 comprises a dose module 5, a build module 6 and an overflow module 7, wherein the apparatus 1 comprises an application unit 8 with an application element 9 that is adapted to pick up build material 3 from a dose plane 10 and convey the build material 3 to a build plane 11. Excess or surplus build material 3 can be deposited in the overflow module 7.

Hence, the application element 9 can be moved in application direction 12 to pick up build material 3 that is provided via the dose module 5 in the dose plane 10. The build material 3 can be lifted upwards via an upward movement of a dose carrier element 13. Hence, build material 3 is provided in the dose plane 10 and can be moved via the application element 9 in application direction 12 to the build plane 11, wherein a build carrier element 14 can be lowered to provide room for the fresh build material 3 to be applied in the build plane 11. Afterwards, the build material 3 can be consolidated, e.g. by means of the energy beam 4.

The apparatus 1 further comprises a buffer module 15 with a buffer carrier element 16 that is also height-adjustable like the dose carrier element 13 of the dose module 5. In an operational state of the dose module 5 in which the dose module 5 is not adapted to provide build material 3 in the dose plane 10, the buffer module 15 can provide build material 3 in a buffer plane 17. Hence, the application element 9 may pick up the build material 3 provided in the buffer plane 17 and convey the build material 3 to the build plane 11, as described before. Hence, instead of picking up build material 3 from the dose plane 10, the application element 9 picks up build material 3 from the buffer plane 17 in the operational state of the dose plane 10 in which the dose module 5 is not adapted to provide build material 3, e.g. during an exchange of the build module 5, when the build module 5 is empty. Thus, a downtime of the apparatus 1 can be avoided, as build material 3 can still be provided via the buffer module 15, for example, if the dose module 5 is detached from the apparatus 1.

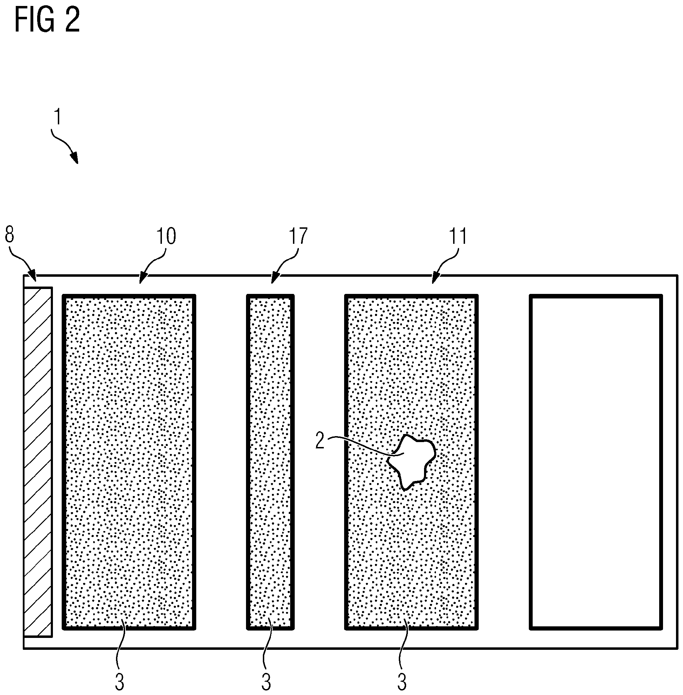

As can further be derived from Fig. 1 or 2, the buffer plane 17 of the buffer module 15 or in which the buffer module 15 provides build material 3, respectively, is smaller than the dose plane 10 of the dose module 5. In this example, the buffer plane 17 comprises the same width as the dose plane 10 perpendicular to the application direction 12 and is smaller than the dose plane 10 in application direction 12. Therefore, the amount of build material 3 that has to be the same by providing build material 3 via the buffer module 15 or the dose module 5, has to be adapted accordingly via a buffer factor compared to a dose factor. In other words, a higher buffer factor has to be used to compensate the smaller size of the buffer plane 17 compared with the dose plane 10.

To provide build material 3, the buffer carrier element 16 can be moved by an actuator (not shown) upwards to provide the proper amount of build material 3 in the buffer plane 17. The movement of the buffer carrier element 16 is controlled dependent on the buffer factor, e.g. the step size by which the buffer carrier element 16 is moved upwards to provide fresh build material 3.

In this exemplary embodiment of the inventive apparatus 1, the buffer module 17 is arranged between the dose module 5 and the build module 6. Since the buffer module 15 is smaller, in particular the buffer plane 17 is smaller than the dose plane 10, the application path of the application element 9 compared with an apparatus 1 that does not comprise a buffer element 15 is not excessively enlarged. Thus, it is possible to save time with each application step, for example compared to a buffer module 15 that provides a buffer plane 17 with the same size as the dose plane 10. Therefore, the overall manufacturing time of the object 2 can significantly be reduced. As the buffer module 15 is only used in operational states of the dose module 5 in which the dose module 5 cannot provide build material 3, the amount of build material 3 that is stored in the buffer module 15 can be significantly reduced compared to the dose module 5.

Further, it is possible that the application element 9 which is moved across the dose plane 10 and the build plane 11, as described before, can be moved between a starting point 18 and an endpoint 19. In this exemplary embodiment, the starting point 18 is arranged in the region of an edge of the dose plane 10 during a regular mode of operation in which the dose module 5 is used for providing build material 3. The endpoint 19 is arranged behind the overflow module 7 in application direction 12. In an operational state in which the buffer module 15 is used to provide build material 3 for the additive manufacturing process, the starting point 18' can be used in other words the starting part 18 can be transferred to the starting point 18' significantly reducing the length of the application path.

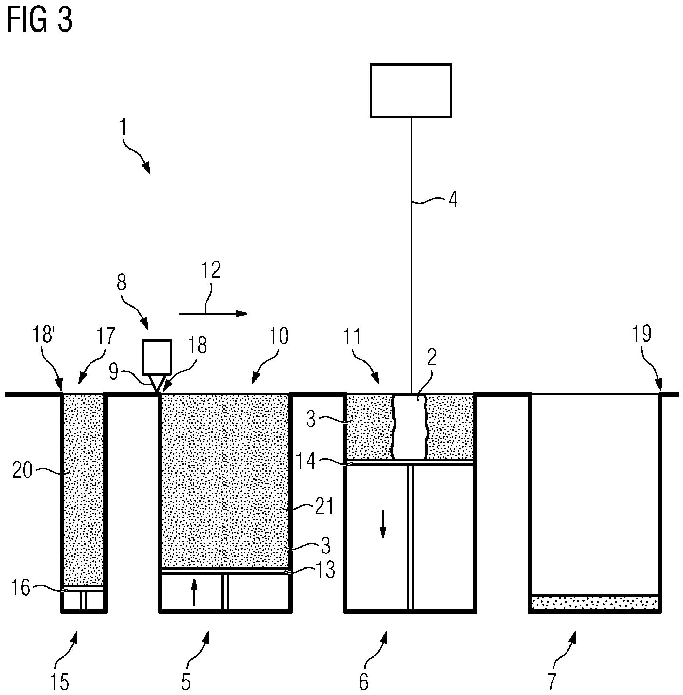

Fig. 3 shows an apparatus 1 according to a second embodiment. The apparatus 1 according to Fig. 3 comprises generally the same setup as the apparatus 1 depicted in Fig. 1, 2, wherein the arrangement of the buffer module 15 differs from the apparatus 1 depicted in Fig. 1, 2. In Fig. 3 the buffer module 15 is also arranged next to the dose module 5, but the buffer module 15 is arranged on the opposite side, i.e. the side of the buffer module 5 that faces away from the build module 6. Hence, the buffer module 15 is arranged in advance to the dose module 5 in application direction 12. In other words, the sequence of buffer module 15, dose module 5 and build module 6 differs between both embodiments, wherein in the first embodiment depicted in Fig. 1, 2 the sequence is dose module 5, buffer module 15 and build module 6, whereas in the second embodiment the sequence is buffer module 15, dose module 5 and build module 6 in application direction 12.

According to the second embodiment, it is possible to further reduce the length of the application path the application element 9 is moved along during a regular mode of operation, as the application element 9 does not have to be moved across the buffer plane 17. Hence, the application element 9 only has to be moved along the "longer" application path during operational states of the dose module 5 in which the dose module 5 cannot provide build material 3 in the dose plane 10. Therefore, the overall manufacturing time can further be reduced, as with each application step of the additive manufacturing process in the regular mode of operation time can be saved. Since the regular mode of operation in which the build material 3 is provided via the dose module 5 forms the vast majority of the application process in an additive manufacturing process, reducing the application path during the regular mode of operation significantly reduces the overall manufacturing time that is required to manufacture the three-dimensional object 2.

The buffer module 15 depicted in Fig. 1 - 3 can be static during an additive manufacturing process performed on the apparatus 1. Hence, the buffer module 15 may remain in the apparatus 1 until the additive manufacturing process in which the object 2 is built, is finished. Afterwards, the buffer module 15 may be exchanged for refilled, for instance. It is also possible that the buffer module 15 can be exchanged during the additive manufacturing process, for example, if a buffer chamber 20 of the buffer module 15 is empty, e.g. in additive manufacturing processes with a high powder consumption leading to a comparatively large number of exchanges of the dose module 5 or additive manufacturing processes with a large number of operational states in which the dose module 5 is not adapted to provide build material 3.

In this case, the buffer module 15 can be exchanged or refilled during an operational state of the dose module 5 in which the dose module 5 is adapted to provide build material 3 in the dose plane 10. Therefore, it is possible to avoid downtimes of the apparatus 1 due to the application process, in particular an operational state in which the dose module 5 is empty or otherwise removed from the apparatus 1.

Self-evidently, all details, features and advantages described with respect to the individual embodiments can be transferred, exchanged and arbitrarily combined.

## Claims

1. Apparatus (1) for additively manufacturing three-dimensional objects (2) by means of successive layerwise consolidation of layers of a build material (3) which can be consolidated by means of an energy source, comprising a dose module (5) and a build module (6) and an application unit (8), wherein the application unit (8) is adapted to convey build material (3) from a dose plane (10) provided by the dose module (5) to a build plane (11) of the build module (6), **characterized by** at least one buffer module (15), wherein the application unit (8) is adapted to convey build material (3) from a buffer plane (17) to the build plane (11), which buffer plane (17) is provided by the buffer module (15) in an operational state of the apparatus (1) in which the dose module (5) is not available, in particular during an exchange of the dose module (5), wherein the buffer plane (17) is smaller than the dose plane (10).

2. Apparatus according to claim 1, **characterized in that** the buffer plane (17) is smaller in application direction (12) than the dose plane (10).

3. Apparatus according to claim 1 or 2, **characterized in that** the buffer plane (17) comprises the same width perpendicular to the application direction (12) as the dose plane (10).

4. Apparatus according to one of the preceding claims, **characterized in that** the buffer module (15) is arranged next to the dose module (5).

5. Apparatus according to claim 4, **characterized in that** the buffer module (15) is arranged between the dose module (5) and the build module (6) in application direction (12).

6. Apparatus according to claim 4, **characterized in that** the buffer module (15) is arranged on a side of the dose module (5) opposite from the build module (6).

7. Apparatus according to one of the preceding claims, **characterized in that** the buffer module (15) comprises a buffer carrier element (16) carrying build material (3) in a buffer chamber (20), which, preferably height-adjustable, buffer carrier element (16) is movable via at least one buffer actuator, wherein the buffer module (15) is adapted to adjust an amount of build material (3) provided in the buffer plane (17) dependent on a buffer factor.

8. Apparatus according to claim 7, **characterized in that** the buffer factor is larger than a corresponding dose factor of the dose module (5).

9. Apparatus according to one of the preceding claims, **characterized in that** the application unit (8) comprises at least one application element (9) moveable along an application path during an application of build material (3), which application path extends from a starting point (18, 18') to an end point (19), wherein during an operational state in which the dose module (5) is not available, the application unit (8) is adapted to change the starting point (18, 18'), in particular to an edge of the buffer module (15).

10. Apparatus according to one of the preceding claims, **characterized in that** the buffer module (15) is static during an additive manufacturing process performed on the apparatus (1).

11. Apparatus according to one of the preceding claims, **characterized in that** the buffer module (15) is exchangeable in advance to or after an additive manufacturing process.

12. Apparatus according to claim 10 or 11, **characterized in that** the buffer module (15) is manually or automatically exchangeable.

13. Apparatus according to one of the claims 1 to 9, **characterized in that** the buffer module (15) is exchangeable during operation of the apparatus (1).

14. Method for operating an apparatus (1) for additively manufacturing three-dimensional objects (2) by means of successive layerwise consolidation of layers of a build material (3) which can be consolidated by means of an energy source, which apparatus (1) comprises a dose module (5) and a build module (6) and an application unit (8), wherein the application unit (8) is adapted to convey build material (3) from a dose plane (10) provided by the dose module (5) to a build plane (11) of the build module (6), **characterized by** conveying build material (3) from at least one buffer plane (17) provided by a buffer module (15) in an operational state of the apparatus (1) in which the dose module (5) is not available, in particular during an exchange of the dose module (5), wherein the buffer plane (17) is smaller than the dose plane (10).

## Patentansprüche

1. Vorrichtung (1) zur additiven Herstellung von dreidimensionalen Objekten (2) mittels sukzessiver schichtweiser Verfestigung von Schichten eines mittels einer Energiequelle verfestigbaren Aufbaumaterials (3), mit einem Dosiermodul (5) und einem Aufbaumodul (6) und einer Auftragseinheit (8), wobei die Auftragseinheit (8) geeignet ist, Aufbaumaterial (3) von einer durch das Dosiermodul (5) bereitgestellten Dosierebene (10) zu einer Aufbauebene (11) des Aufbaumoduls (6) zu fördern (10), die durch das Dosiermodul (5) bereitgestellt wird, zu einer Aufbauebene (11) des Aufbaumoduls (6) zu befördern, **gekennzeichnet durch** mindestens ein Puffermodul (15), wobei die Applikationseinheit (8) angepasst ist, um Aufbaumaterial (3) von einer Pufferebene
(17) zu der Aufbauebene (11) zu fördern, wobei die Pufferebene (17) durch das Puffermodul (15) in einem Betriebszustand der Vorrichtung (1) bereitgestellt wird, in dem das Dosiermodul (5) nicht verfügbar ist, insbesondere während eines Austauschs des Dosiermoduls (5), wobei die Pufferebene (17) kleiner als die Dosierebene (10) ist.

2. Vorrichtung nach Anspruch 1, **dadurch gekennzeichnet, dass** die Pufferebene (17) in Applikationsrichtung (12) kleiner ist als die Dosisebene (10).

3. Vorrichtung nach Anspruch 1 oder 2, **dadurch gekennzeichnet, dass** die Pufferebene (17) die gleiche Breite senkrecht zur Applikationsrichtung (12) aufweist wie die Dosisebene (10).

4. Vorrichtung nach einem der vorhergehenden Ansprüche, **dadurch gekennzeichnet, dass**
das Puffermodul (15) neben dem Dosiermodul (5) angeordnet ist.

5. Vorrichtung nach Anspruch 4, **dadurch gekennzeichnet, dass** das Puffermodul (15) in Auftragsrichtung (12) zwischen dem Dosiermodul (5) und dem Aufbaumodul (6) angeordnet ist.

6. Vorrichtung nach Anspruch 4, **dadurch gekennzeichnet, dass** das Puffermodul (15) auf einer dem Aufbaumodul (6) gegenüberliegenden Seite des Dosiermoduls (5) angeordnet ist.

7. Vorrichtung nach einem der vorhergehenden Ansprüche, **dadurch gekennzeichnet, dass** das Puffermodul (15) ein Pufferträgerelement (16) umfasst, das Aufbaumaterial (3) in einer Pufferkammer (20) trägt, wobei das vorzugsweise höhenverstellbare Pufferträgerelement (16) über mindestens einen Pufferaktuator bewegbar ist, wobei das Puffermodul (15) geeignet ist, eine in der Pufferebene (17) bereitgestellte Menge an Aufbaumaterial (3) in Abhängigkeit von einem Pufferfaktor einzustellen.

8. Vorrichtung nach Anspruch 7, **dadurch gekennzeichnet, dass** der Pufferfaktor größer ist als ein entsprechender Dosisfaktor des Dosismoduls (5).

9. Vorrichtung nach einem der vorhergehenden Ansprüche, **dadurch gekennzeichnet, dass** die Applikationseinheit (8) mindestens ein Applikationselement (9) aufweist, das während einer Applikation von Aufbaumaterial (3) entlang eines Applikationsweges bewegbar ist, der sich von einem Startpunkt (18, 18') zu einem Endpunkt (19) erstreckt, wobei die Applikationseinheit (8) während eines Betriebszustandes, in dem das Dosismodul (5) nicht zur Verfügung steht, dazu eingerichtet ist, den Startpunkt (18, 18') zu verändern, insbesondere an einen Rand des Puffermoduls (15).

10. Vorrichtung nach einem der vorhergehenden Ansprüche, **dadurch gekennzeichnet, dass** das Puffermodul (15) während eines an der Vorrichtung (1) durchgeführten additiven Fertigungsprozesses statisch ist.

11. Vorrichtung nach einem der vorhergehenden Ansprüche, **dadurch gekennzeichnet, dass** das Puffermodul (15) vor oder nach einem additiven Fertigungsprozess austauschbar ist.

12. Vorrichtung nach Anspruch 10 oder 11, **dadurch gekennzeichnet, dass** das Puffermodul (15) manuell oder automatisch austauschbar ist.

13. Vorrichtung nach einem der Ansprüche 1 bis 9, **dadurch gekennzeichnet, dass** das Puffermodul (15) während des Betriebs der Vorrichtung (1) austauschbar ist.

14. Verfahren zum Betreiben einer Vorrichtung (1) zur additiven Herstellung von dreidimensionalen Gegenständen (2) mittels sukzessiver schichtweiser Verfestigung von Schichten eines mittels einer Energiequelle verfestigbaren Aufbaumaterials (3), welche Vorrichtung (1) ein Dosiermodul (5) und ein Aufbaumodul (6) sowie eine Applikationseinheit (8) umfasst, wobei die Applikationseinheit (8) geeignet ist, Aufbaumaterial (3) von einer durch das Dosiermodul (5) bereitgestellten Dosierebene (10) zu einer Aufbauebene (11) des Aufbaumoduls (6) zu befördern, **gekennzeichnet durch** das Befördern von Aufbaumaterial (3) von mindestens einer durch ein Puffermodul (15) bereitgestellten Pufferebene (17) in einem Betriebszustand der Vorrichtung (1), in dem das Dosiermodul (5) nicht verfügbar ist, insbesondere während eines Austauschs des Dosiermoduls (5), wobei die Pufferebene (17) kleiner als die Dosierebene is

## Revendications

1. Dispositif (1) pour la fabrication additive d'objets tridimensionnels (2) au moyen d'une consolidation successive par couches de couches d'un matériau de construction (3) qui peut être consolidé au moyen d'une source d'énergie, comprenant un module de dose (5) et un module de construction (6) et une unité d'application (8), dans lequel l'unité d'application (8) est adaptée pour transporter le matériau de construction (3) depuis un plan de dose
(10) fourni par le module de dose (5) à un plan de construction (11) du module de construction (6), **caractérisé par** au moins un module tampon (15), dans lequel l'unité d'application (8) est adaptée pour transporter le matériau de construction (3) d'un plan tampon (17) au plan de construction (11).
(17) vers le plan de construction (11), lequel plan tampon (17) est fourni par le module tampon (15) dans un état opérationnel de l'appareil (1) dans lequel le module de dose (5) n'est pas disponible, en particulier pendant un échange du module de dose (5), dans lequel le plan tampon (17) est plus petit que le plan de dose (10).

2. Dispositif selon la revendication 1, **caractérisé en ce que** le plan tampon (17) est plus petit dans la direction d'application (12) que le plan de dose (10).

3. Dispositif selon la revendication 1 ou 2, **caractérisé en ce que** le plan tampon (17) comprend la même largeur perpendiculairement à la direction d'application (12) que le plan de dose (10).

4. Dispositif selon l'une des revendications précédentes, **caractérisé en ce que** le module tampon (15) est disposé à côté du module de dose (5).

5. Dispositif selon la revendication 4, **caractérisé en ce que** le module tampon (15) est disposé entre le module de dose (5) et le module de construction (6) dans la direction d'application (12).

6. Dispositif selon la revendication 4, **caractérisé en ce que** le module tampon (15) est disposé sur un côté du module de dosage (5) opposé au module de construction (6).

7. Dispositif selon l'une des revendications précédentes, **caractérisé en ce que** le module tampon (15) comprend un élément porteur de tampon (16) portant du matériau de construction (3) dans une chambre tampon (20), lequel élément porteur de tampon (16), de préférence réglable en hauteur, est mobile par l'intermédiaire d'au moins un actionneur de tampon, dans lequel le module tampon (15) est adapté pour régler une quantité de matériau de construction (3) prévue dans le plan tampon (17) en fonction d'un facteur tampon.

8. Dispositif selon la revendication 7, **caractérisé en ce que** le facteur de tampon est plus grand qu'un facteur de dose correspondant du module de dose (5).

9. Dispositif selon l'une des revendications précédentes, **caractérisé en ce que** l'unité d'application (8) comprend au moins un élément d'application (9) mobile le long d'un trajet d'application pendant une application de matériau de construction (3), lequel trajet d'application s'étend d'un point de départ (18, 18') à un point d'extrémité (19), dans lequel pendant un état opérationnel dans lequel le module de dosage (5) n'est pas disponible, l'unité d'application (8) est adaptée pour changer le point de départ (18, 18'), en particulier vers un bord du module tampon (15).

10. Dispositif selon l'une des revendications précédentes, **caractérisé en ce que** le module tampon (15) est statique pendant un procédé de fabrication additive réalisé sur l'appareil (1).

11. Dispositif selon l'une des revendications précédentes, **caractérisé en ce que** le module tampon (15) est interchangeable avant ou après un procédé de fabrication additive.

12. Dispositif selon la revendication 10 ou 11, **caractérisé en ce que** le module tampon (15) est échangeable manuellement ou automatiquement.

13. Dispositif selon l'une des revendications 1 à 9, **caractérisé en ce que** le module tampon (15) est interchangeable pendant le fonctionnement de l'appareil (1).

14. Procédé pour faire fonctionner un appareil (1) pour la fabrication additive d'objets tridimensionnels (2) au moyen de la consolidation successive par couches de couches d'un matériau de construction (3) qui peut être consolidé au moyen d'une source d'énergie, lequel appareil (1) comprend un module de dosage (5) et un module de construction (6) et une unité d'application (8), dans lequel l'unité d'application (8) est adaptée pour transporter le matériau de construction (3) d'un plan de dose (10) fourni par le module de dose (5) à un plan de construction (11) du module de construction (6), **caractérisé par** le transport du matériau de construction (3) depuis au moins un plan tampon (17) fourni par un module tampon (15) dans un état opérationnel de l'appareil (1) dans lequel le module de dose (5) n'est pas disponible, en particulier pendant un échange du module de dose (5), dans lequel le plan tampon (17) est plus petit que le plan de dose (10).
